Europäisches Patentamt

European Patent Office

Office européen des brevets

(11) Veröffentlichungsnummer: **0 427 000 A2**

# EUROPÄISCHE PATENTANMELDUNG

(21) Anmeldenummer: 90119561.0

(22) Anmeldetag: 12.10.90

(51) Int. Cl.5: **B60K 41/08**

(30) Priorität: 09.11.89 DE 3937302

(43) Veröffentlichungstag der Anmeldung:
15.05.91 Patentblatt 91/20

(84) Benannte Vertragsstaaten:
**DE FR GB IT NL SE**

(71) Anmelder: MAN Nutzfahrzeuge
Aktiengesellschaft
Dachauer Strasse 667 Postfach 50 06 20
W-8000 München 50(DE)

Anmelder: Fichtel & Sachs AG
Ernst-Sachs-Strasse 62
W-8720 Schweinfurt(DE)

(72) Erfinder: von Korff, Peter, Dipl.-Ing.
Seestrasse 14
W-8084 Buch am Ammersee(DE)
Erfinder: Drewitz, Hans, Ing. (grad.)
Agnesstrasse 59
W-8000 München 40(DE)
Erfinder: Lexen, Gerald, Dipl.-Ing.
Johann-Emmer-Strasse 1
W-8000 München 50(DE)
Erfinder: Nagler, Franz, Dipl.-Ing. (FH)
Am Zehntgrafen 12
W-8729 Gädheim Ottendorf(DE)
Erfinder: Albert, Bernd, Dipl.-Ing. (FH)
Johann-Moritz-Strasse 6
W-8729 Knetzgau(DE)
Erfinder: Konrad, Andres, Dipl.-Ing. (FH)
Ringstrasse 14
W-8722 Untereuerheim(DE)

(54) **Verfahren zum Schalten eines unsynchronisierten (Klauen-)Schaltgetriebes und, gegebenenfalls automatischen, Betätigen der zugehörigen Kupplung.**

(57) Es wird ein Verfahren zum Schalten eines in einem Kraftfahrzeug gegebenen unsynchronisierten (Klauen-)Schaltgetriebes (4) und, gegebenenfalls automatischen, Betätigen der zugehörigen Kupplung (3) angegeben. Das Schaltgetriebe (4) verfügt über mehrere vom Fahrer (6) mit dem Gang-Schalthebel (8) direkt mechanisch einlegbare Hauptgänge und mehrere jeweils in Verbindung mit dem Hauptgang vorwählbare Splitgänge. Das Verfahren der erfindungsgemäßen Art zeichnet sich dadurch aus, daß zum Beschleunigen der Gangschaltung eine Drehzahlanpassung der mit den auf der Getriebehauptwelle sitzenden Zahnrädern in Wirkverbindung zu bringenden Zahnräder in der Weise bewirkt wird, daß - nachdem das zu schaltende Zahnrad in eine Neutral- bzw. Zwischenposition gebracht ist - bei geschlossen gehaltener Kupplung (3)

a) für ein "Hochschalten" kurzzeitig die Motordrehzahl durch automatisch gesteuerte bzw. geregelte Betätigung der Motorbremse und gleichzeitige Kraftstoffeinspritzmengenzurücknahme gedrosselt, dagegen

b) für ein "Herunterschalten" die Motordrehzahl

kurzzeitig durch, insbesondere automatisch gesteuerte bzw. geregelte Kraftstoffeinspritzmengenerhöhung angehoben und dann - bei sensormäßig erkannter Drehzahlsynchronität der zu schaltenden Zahnräder - das betreffende Zahnrad in Wirkverbindung mit dem auf der Getriebehauptwelle sitzenden Zahnrad gebracht wird.

Fig. 1

# VERFAHREN ZUM SCHALTEN EINES UNSYNCHRONISIERTEN (KLAUEN-)SCHALTGETRIEBES UND, GEGE-BENENFALLS AUTOMATISCHEN, BETÄTIGEN DER ZUGEHÖRIGEN KUPPLUNG

Die Erfindung betrifft ein Verfahren zum Schalten eines in einem Kraftfahrzeug zwischen Antriebsmotor und Achsantriebsstrang gegebenen unsynchronisierten (Klauen-)Schaltgetriebes und, gegebenenfalls automatischen, Betätigen der zugehörigen Kupplung, mit Merkmalen entsprechend dem Oberbegriff des Anspruchs 1.

Die Erfindung geht aus von Erkenntnissen, die beim Betrieb von Kraftfahrzeugen gewonnen wurden, welche mit einem herkömmlichen unsynchronisierten (Klauen-)Schaltgetriebe (beispielsweise dem Twinsplittgetriebe der Firma Eaton) und einer automatisiert geschalteten Kupplung ausgestattet sind. Ein solches Getriebe hat, um einen Hochschaltvorgang zu beschleunigen, eine bei Aktivierung die Drehzahl der Getriebehauptwelle reduzierende Getriebebremse. Außerdem ist jedem der durch druckmittelbetätigte Stelleinrichtungen verschiebbaren Splitgang-Zahnräder ein mehrteiliges mechanisches Schalthilfeorgan zugeordnet, bestehend aus einer Druckfeder, einer auf der Getriebehauptwelle drehfest, aber axial entgegen der Kraft der Druckfeder verschiebbaren Schaltmuffe und einem Synchronschaltring. Letzterer ist mit dem zugehörigen Splitgang-Zahnrad drehfest verbunden und ermöglicht bei Synchrondrehzahl mit der Getriebehauptwelle, daß die bei Einleitung eines Gangschaltvorganges vorgespannte Druckfeder sich entspannen kann und dabei die Schaltmuffe axial verschiebt, wobei zunächst deren Außenklauenverzahnung mit der Innenklauenverzahnung des Synchronschaltringes in Eingriff und dann bei weiterer Axialverschiebung auch das Splitgang-Zahnrad mit seiner Innenklauenverzahnung mit der Außenklauenverzahnung an der Schaltmuffe in Eingriff kommt, in welchem Fall dann der Gang geschaltet und das betreffende Splitgang-Zahnrad drehfest an die Getriebehauptwelle angekoppelt ist.

Dieses Abbremsen der Getriebehauptwelle mittels der Getriebebremse und dieses drehzahlsynchronisierte Ankoppeln eines Splitgang-Zahnrades an die Getriebehauptwelle bewirken einen zeitlich relativ lang andauernden Schaltvorgang. Dies erweist sich insbesondere, wenn ein schnelles Schalten mehrerer Gänge hintereinander erforderlich ist, als hinderlich, in prekären Verkehrssituationen möglicherweise sogar als kritisch, und erscheint deshalb verbesserungsnotwendig.

Es ist daher ausgehend von diesen Erkenntnissen Aufgabe der Erfindung, in Verbindung mit einem gegebenenfalls zu modifizierenden, insbesondere zu vereinfachenden (Klauen-)Schaltgetriebe ein Verfahren zum Schalten desselben und Betätigen der zugehörigen Kupplung zu schaffen, mit dem Ziel, eine Verkürzung der Schaltzeiten und damit eine Verkürzung der Unterbrechungszeiten des Antriebsstranges beim Schalten der Gänge sowie eine Erhöhung des Bedienungskomforts im Fahrbetrieb zu erreichen.

Diese Aufgabe ist erfindungsgemäß durch das im Anspruch 1 angegebene Verfahren gelöst.

Vorteilhafte Ausgestaltungen und Einzelheiten dieses Verfahrens sowie der diesbezüglich zur Ausführung notwendigen Vorrichtungsteile sind in den Unteransprüchen angegeben.

Nachstehend ist die erfindungsgemäße Lösung unter Zuhilfenahme der Zeichnung näher erläutert. In der Zeichnung zeigen:

Fig. 1 schematisiert als Blockschaltbild einen Antriebsstrang eines Kraftfahrzeuges mit den für das Verständnis der Erfindung wesentlichen Organen,

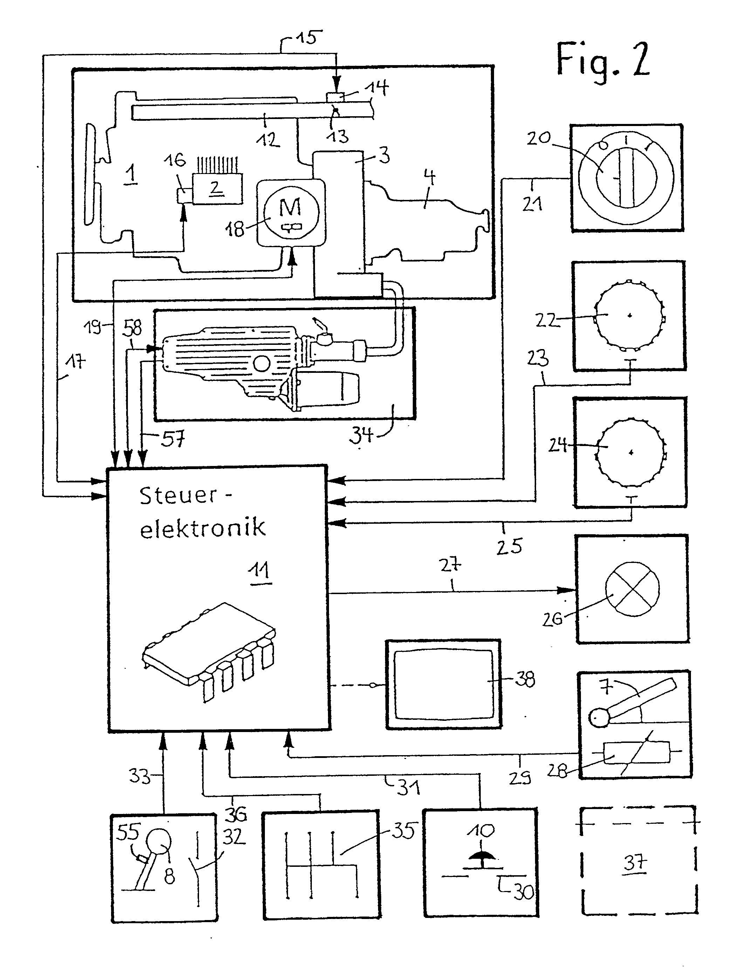

Fig. 2 ein gegenüber jenem von Fig. 1 detaillierteres Blockschaltbild des Antriebsstranges samt zugehöriger Regel- und Steuerorgane und Sensorik,

Fig. 3 einen Schnitt durch ein Schaltgetriebe bekannter Bauart (Eaton-Twinsplitter),

Fig. 4 eine dem Schaltgetriebe gemäß Fig. 3 zugeordnete Getriebebremse.

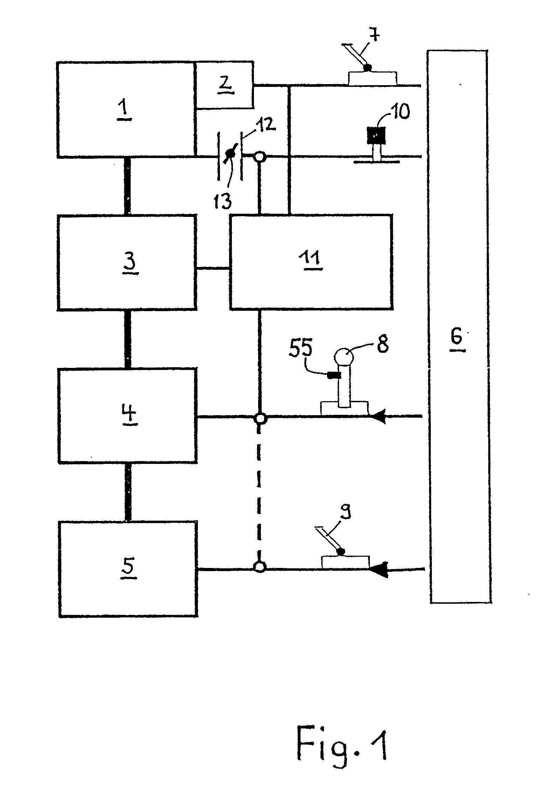

In Fig. 1 sind von einem Kraftfahrzeug als Teile von dessen Antriebsstrang der Antriebsmotor mit 1, dessen Einspritzpumpe mit 2, eine Kupplung mit 3, ein unsynchronisiertes (Klauen-)Schaltgetriebe mit 4 und der anzutreibende Achsantriebsstrang mit 5 bezeichnet. Der Fahrer ist durch das mit 6 markierte Kästchen symbolisiert. Er kann durch Einflußnahme auf das Fahrpedal 7, den Gang-Schalthebel 8, das Bremspedal 9 und den Motorbremsen-Aktuator 10 den Betrieb des Fahrzeugs in der gewünschten Weise steuern. Ein Kupplungspedal ist nicht vorhanden, die Steuerung der Kupplung 3 und anderer Vorgänge wird von einer Steuerelektronik 11 aus bewerkstelligt. Im Abgassystem 12 des Antriebsmotors 1 ist als Teil der Motorbremse eine Drosselklappe 13 eingebaut, die eine offene, geschlossene und geregelt eingesteuerte Zwischenpositionen einnehmen kann. Die Einstellung erfolgt über ein Stellorgan 14, das seine Befehle von der Steuerelektronik 11 erhält und seinen jeweiligen Aktuierungszustand auch an letztere zurückmeldet (über Leitung 15). An der Steuerelektronik 11 kann auch ein auf die Regelstange der Einspritzpumpe 2 einwirkendes Verstellglied 16 mit rückmeldendem Einspritzmengensensor (über Leitung 17) angeschlossen sein. Dies setzt aber ein sogenanntes E-Gas-Fahrpedal 7 voraus. Falls ein solches im Fahrzeug nicht, sondern ein herkömmliches Gaspedal vorhanden ist, erfolgt die Verstellung der Einspritzpumpe 2 direkt in Abhängigkeit von der Einflußnahme des Fahrers auf besagtes Gaspedal.

An der Steuerelktronik 11 sind außerdem die Steuerung des Anlassermotors 18 (über Leitung 19), der Zündschalter 20 (über Leitung 21), ein Motordrehzahl-Sensor 22 (über Leitung 23), eine oder mehrere Drehzahlen im Getriebe erfassende Sensoren 24 (über Leitung 25), Kontrollanzeigen 26 (über Leitung 27), ein Fahrpedalstellungsgeber 28 (über Leitung 29), ein die Betätigung des Motorbremsenaktuators 10 erfassender Sensor 30 (über Leitung 31), ein den Betätigungszustand des Gang-Schalthebels 8 erfassender Sensor 32 (über Leitung 33), das elektrohydraulische bzw. elektropneumatische bzw. elektromechanische Stellorgan 34 der Kupplung 3 sowie die Schaltzustände der letzteren und des Stellorgans 34 erfassende Sensoren (über Leitungen 57, 58), Gangwahlerkennungssensoren 35 (über Leitung 36) und weitere, nicht näher erläuterte Sensoren 37 angeschlossen. Mit 38 ist ein Diagnosegerät bezeichnet, das mit der Steuerelektronik 11 verbunden bzw. verbindbar ist für Test- bzw. Kontrollzwecke.

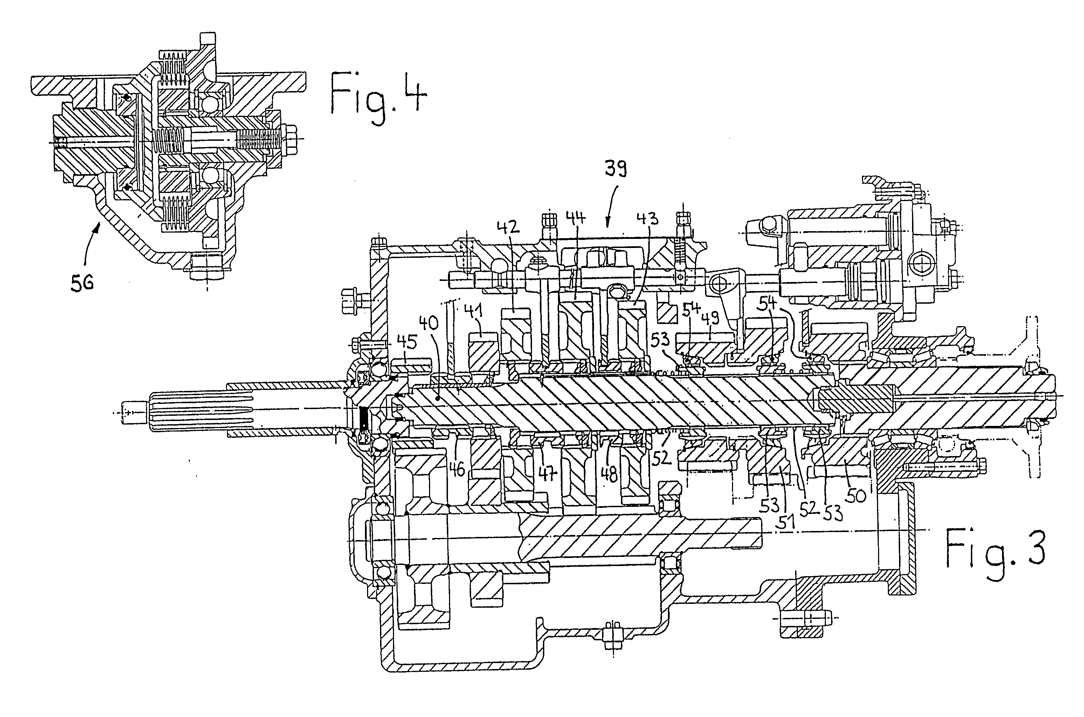

Aus Fig. 3 ist ein Schaltgetriebe 39 bekannter Bauart (Twin-Splitter von Eaton) ersichtlich, dem eine auf die Getriebehauptwelle 40 einwirkende steuerbare Getriebebremse 56 der aus Fig. 4 ersichtlichen Art zugeordnet ist. Auf dieses Schaltgetriebe 39 sei nur in jenen Teilen Bezug genommen, die für das Verständnis der Erfindung notwendig sind. Das Schaltgetriebe 39 verfügt über vier vom Fahrer mit dem Gang-Schalthebel 8 direkt mechanisch einlegbare Vorwärts-Hauptgänge sowie ernen Rückwärts=Hauptgang und drei, jeweils in Verbindung mit einem Hauptgang wählbare Splitgänge, wofür am Gang-Schalthebel 8 ein in drei Positionen einstellbarer Wahlschalter 55 vorgesehen ist. Die Zahnräder der vier (Vorwärts-)Hauptgänge sind mit 41, 42, 43, 44, das Zahnrad des Rückwärtshauptganges ist mit 45 bezeichnet. Die diese Zahnräder in bzw. außer Wirkverbindung mit der Getriebehauptwelle 40 bringenden und jeweils an einen vom Gang-Schalthebel 8 aus aktivierbaren Schaltmechanismus angeschlossenen Schaltmuffen sind mit 46, 47, 48 bezeichnet.

Die durch druckmittelbetätigte Stelleinrichtungen verschiebbaren Splitgang-Zahnräder sind mit 49, 50, 51 bezeichnet. Jedem dieser Splitgang-Zahnräder ist ein mehrteiliges mechanisches Schalthilfeorgan zugeordnet, bestehend aus einer Druckfeder 52, eine auf der Getriebehauptwelle 40 drehfest, aber axial entgegen der Kraft der Druckfeder 52 verschiebbaren Schaltmuffe 53 und einem Synchronschaltring 54. Lezterer ist mit dem zugehörigen Splitgang-Zahnrad drehfest verbunden und ermöglicht bei Synchrondrehzahl des letzteren mit der Getriebehautpwelle 40, daß die bei Einleitung eines Gangschaltvorganges durch Verschieben des betreffenden Splitgang-Zahnrades in eingriffslose Zwischenposition vorgespannte Druckfeder 52 sich entspannen kann und dabei die Schaltmuffe 53 verschiebt. Dabei kommt zunächst deren Außenklauenverzahnung mit der Innenklauenverzahnung des Synchronschaltringes 54 in Eingriff. Bei weiterer Axialverschiebung kommt dann auch das Splitgang-Zahnrad mit seiner Innenklauenverzahnung mit der Außenklauenverzahnung an der Schaltmuffe 53 in Eingriff. Somit ist dann der betreffende Splitgang geschaltet und das zugehörige Splitgang-Zahnrad drehfest an die Getriebehauptwelle 40 angekoppelt.

Mittels des erfindungsgemäßen Verfahrens lassen sich die Schaltvorgänge sowohl der Hauptgänge als auch der Splitgänge in Vergleich zu bisher erreichbaren Schaltzeiten erheblich beschleunigen. Bewirkt wird dies durch eine raschere Drehzahlanpassung der mit den auf der Getriebehauptwelle 40 sitzenden Zahnrädern in Wirkverbindung zu bringenden Zahnräder 41, 42, 43, 44, 49, 50, 51 in der nachstehend in ihren Einzelheiten beschriebenen Art und Weise.

Das Grundprinzip zum Erreichen dieses Ziels besteht darin, daß - nachdem das zu schaltende Zahnrad in eine Neutral-bzw. Zwischenposition gebracht ist - bei geschlossen gehaltener Kupplung 3

a) für ein "Hochschalten" die Motordrehzahl durch automatisch gesteuerte bzw. geregelte Betätigung der Motorbremse und gleichzeitige Kraftstoffeinspritzmengenzurücknahme gedrosselt wird, was einen Bremsimpuls an der Getriebehauptwelle 40 bewirkt, dagegen

b) für ein "Herunterschalten" die Motordrehzahl durch vom Fahrer bewirkte oder automatisch gesteuerte Kraftstoffeinspritzmengenerhöhung angehoben wird, was einen Beschleunigungsimpuls an der Getriebehauptwelle 40 bewirkt, und dann - bei sensormäßig erkannter Drehzahlsynchronität der zu schaltenden Zahnräder - das betreffende Zahnrad in Wirkverbindung mit dem auf der solchermaßen beschleunigten bzw. abgebremsten Getriebehauptwelle 40 sitzenden Zahnrad gebracht wird.

Im einzelnen wird dabei zum Schalten der Hauptgänge ausgehend von in Neutralstellung befindlichem Gang-Schalthebel 8 folgendes ausgelöst bzw. bewirkt, nämlich

a) für ein vom Fahrer durch eine Bewegung des sensorierten Gang-Schalthebels 8 in Richtung des gewünschten Hauptganges signalisiertes "Hochsohalten" wird bei geschlossen gehaltener Kupplung 3 kurzzeitig (für ca. 100 ms bis ca. 300 ms) die Drehzahl des Antriebsmotors 1 (nachfolgend immer Motordrehzahl genannt) gedrosselt, und zwar durch einen Befehl der Steuerelktronik 11 an das Stellorgan 14 zum Schließen der Motorbremsen-Drosselklappe 13 und eine gleichzeitige Kraftstoffeinspritzmengenzurücknahme (letzteres vom Fahrer oder der Steuerelektronik 11 initiiert); dann wird - im Fall des Vorhandenseins eines E-Gas-Fahrpedals 7 - bei geschlossen gehaltener Kupplung 3 vom Fahrer der gewünschte Hauptgang durch entsprechende Betätigung des Gang-Schalthebels 8 eingelegt, dagegen -wenn ein herkömmliches Fahrpedal 7 vorhanden ist - wird durch einen Befehl der Steuerelektronik 11 an das Stellorgan 34 die Kupplung 3 geöffnet, der Fahrer legt den gewünschten Hauptgang durch entsprechende Betätigung des Gang-Schalthebels 8 ein und die Steuerelektronik 11 veranlaßt zuletzt das Schließen der Kupplung 3,

b) für ein vom Fahrer durch eine Bewegung des Gang-Schalthebels 8 in Richtung des gewünschten Hauptganges signalisiertes "Herunterschalten" wird ausgehend von geschlossener Kupplung 3 eine kurzzeitige (ca. 100 ms bis 400 ms betragende) Erhöhung der Motordrehzahl durch Erhöhung der Einspritzmenge (Befehl an das Stellorgan 16 der Einspritzpumpe 2) bewirkt; dann wird - im Fall des Vorhandenseins eines E-Gas-Fahrpedals 7 - bei geschlossen gehaltener Kupplung 3 vom Fahrer der gewünschte Hauptgang durch entsprechende Betätigung des Gang-Schalthebels 8 eingelegt, dagegen - wenn ein herkömmliches Fahrpedal 7 vorhanden ist - wird von der Steuerelektronik 11 ein Öffnen der Kupplung 3 ausgelöst, worauf vom Fahrer der niedrigere Hauptgang durch entsprechende Betätigung des (Gang-Schalthebels 8 eingelegt, d.h. das betreffende Zahnrad in Wirkverbindung mit dem auf der Getriebehauptwelle 40 sitzenden Zahnrad gebracht und dann die Kupplung 3 durch einen Befehl von der Steuerelektronik 11 wieder geschlossen wird.

Zum Schalten der Splitgänge hat der Fahrer bei geschlossener Kupplung 3 den gewünschten Splitgang vorzuwählen, durch entsprechende Verstellung des Wahlschalters 55 am Gang-Schalthebel 8, worauf das zugehörige Splitgang-Zahnrad automatisch gesteuert über das zugeordnete Stell-organ in eine eingriffslose Zwischenposition gebracht wird.

Wenn durch die Splitgangwahl ein "Hochschalten" signalisiert ist, wird von der Steuerelektronik 11 ein kurzzeitiges (ca. 100 ms bis 300 ms betragendes) Drosseln der Motordrehzahl initiiert, durch eine Initiative zum Schließen der Motorbremsen-Drosselklappe 13 und eine Initiative zur Zurücknahme der Kraftstoffeinspritzmenge durch entsprechende Einflußnahme auf das Stell-organ 16 der Einspritzpumpe 2. Hierdurch wird in kürzester Zeit eine Drehzahlsynchronität zwischen dem auf der solchermaßen abgebremsten Getriebehauptwelle 40 sitzenden Zahnrad und dem anzukoppelnden Splitgang-Zahnrad herbeigeführt und, wenn Drehzahl-Synchronität zwischen beiden Zahnrädern gegeben ist, das Splitgang-Zahnrad über die Teile 52, 53, 54 der Schalthilfeeinrichtung in Wirkverbindung mit dem auf der Getriebehauptwelle 40 sitzenden Zahnrad gebracht.

Wenn jedoch durch die Splitgangwahl ein "Herunterschalten" signalisiert ist, dann wird vom Fahrer oder von der Steuerelektronik 11 eine kurzzeitige (ca. 100 ms bis ca. 300 ms betragende) Erhöhung der Kraftstoffeinspritzmenge durch entsprechende Einflußnahme auf das Stellorgan 16 der Einspritzpumpe 2 ausgelöst. Sobald auch in diesem Fall Drehzahlsynchronität zwischen dem auf der solchermaßen beschleunigten Getriebehauptwelle 40 sitzenden Zahnrad und dem betreffenden Splitgang-Zahnrad gegeben ist, wird letzteres über die Teile 52, 53, 54 der Schalthilfeeinrichtung in Wirkverbindung mit besagtem auf der Getriebehauptwelle 40 sitzenden Zahnrad gebracht.

Im Ergebnis bedeutet dies, daß - trotz der Verwendung eines herkömmlichen Schaltgetriebes - die Schaltung eines Ganges in einem Zeitraum von ca. 100 ms bis ca. 400 ms abgeschlossen ist und daher am Antriebsstrang defakto keine nennenswerte Zugkraft- bzw. Schubkraftunterbrechung auftritt, was zwangsläufig auch den Schalt- und Fahrkomfort gegenüber bisherigen Verhältnissen erhöht.

Es ist überdies ein Charakteristikum des erfindungsgemäßen Grundprinzipes, daß dieses mit ausgezeichnetem Erfolg auch bei einem unsynchronisierten (Klauen-)Schaltgetriebe anwendbar ist, das im Gegensatz zu dem bekannten (gemäß Fig. 3 und 4) keine Getriebebremse aufweist und dessen durch druckmittelbetätigte Stelleinrichtungen verschiebbare, vorzugsweise jedoch rein mechanisch wie die Hauptgänge schaltbare Splitgang-Zahnräder ohne Zuhilfenahme mechanischer, dreh-zahlsynchronisierender Schalthilfeorgane mit den auf der Getriebehauptwelle 40 sitzenden Zahnrädern in Wirkverbindung bringbar sind. Das heißt, mit dem erfindungsgemäßen Schalt- und Steuerungsprinzip ist ein im Aufbau wesentlich vereinfachtes und damit billigeres Schaltgetriebe verwendbar, denn die ganze Baugruppe Getriebebremse 56 (gemäß Fig. 4) sowie alle Teile 52, 53, 54 der je Splitgang-Zahnrad bisher benötigten Schalthilfeeinrichtung, gegebenenfalls auch die druckmittelbetätigten Stelleinrichtungen können entfallen. Für die Schaltung der Splitgang-Zahnräder können wesentlich einfachere Organe verwendet werden, die den Schaltmuffen 46, 47, 48 für die Schaltung der Hauptgänge ähnlich sind; außerdem vereinfacht sich die Bauart der Splitgang-Zahnräder. Lediglich der die Hauptgänge betreffende Teil des Getriebes verbleibt unverändert, so, wie beim bislang bekannten Getriebe.

Ein solch einfacheres Schaltgetriebe erfordert im Detail jedoch eine gegenüber der vorher geschilderten abgewandelte Schalt- und Steuerstrategie, ohne jedoch das erfindungsgemäße Grundprinzip zu verlassen.

Das Schalten der Hauptgänge erfolgt, weil der diesbezügliche Teil des Getriebes unverändert ist, in gleicher Weise wie bei dem vorstehend anhand von Fig. 3 beschriebenen Schaltgetriebe 39.

Zum Schalten der Splitgänge ist vom Fahrer bei geschlossener Kupplung 3 wie bisher der gewünschte Splitgang mit dem Wahlschalter 55 am Gang-Schalthebel 8 vorzuwählen. Dieses bewirkt ein automatisches Verschieben des angewählten Split gang-Zahnrades in eine eingriffslose Zwischenposition, was von der zugehörigen Stelleinrichtung bewerkstelligt wird. Das Splitgang-Zahnrad fährt dabei auf eine Anschlagposition, die durch die Steuerung über die Stelleinrichtung oder anderweitig vorgegeben wird.

Wenn nun durch die Splitgang-Wahl ein "Hochschalten" signalisiert war, dann wird bei weiterhin geschlossen gehaltener Kupplung 3 die Motordrehzahl kurzzeitig (für ca. 100 ms bis (ca. 300 ms) gedrosselt, durch Befehle der Steuerelektronik 11 an das Stellorgan 14 zum Schließen der Motorbremsen-Drosselklappe 13 sowie durch Einflußnahmen auf das Stellorgan 16 der Einspritzpumpe 2 zum Reduzieren der Kraftstoffeinspritzmenge. Sobald Drehzahlsynchronität zwischen dem auf der solchermaßen abgebremsten Getriebehauptwelle 40 sitzenden Zahnrad und dem besagten Splitgang-Zahnrad signalisiert ist, wird - im Fall des Vorhandenseins eines E-Gas-Fahrpedals 7 bei geschlossen gehaltener Kupplung 3 das betreffende Splitgang-Zahnrad in Wirkverbindung mit dem auf der Getriebehauptwelle 40 sitzenden Zahnrad gebracht; wenn dagegen ein herkömmliches Fahrpedal 7 vorhanden ist, wird von der Steuerelektronik 11 ein Befehl für Öffnen der Kupplung 3 ausgegeben, das Splitgang-Zahnrad wird manuell oder automatisch in Wirkverbindung mit dem auf der Getriebehauptwelle 40 sitzenden Zahnrad geschaltet und anschließend wird wieder ein Befehl zum Schließen der Kupplung 3 an deren Stellorgan 34 ausgegeben.

Falls jedoch durch die Splitgang-Wahl ein "Herunterschalten" signalisiert war, dann wird bei weiterhin geschlossen gehaltener Kupplung 3 eine kurzzeitige (ca. 100 ms bis ca. 300 ms dauernde) Erhöhung der Motordrehzahl durch entsprechende Einflußnahme auf das Stellorgan 16 der Einspritzpumpe 2 bewirkt, wodurch die Getriebehauptwelle 40 beschleunigt wird. Sobald Drehzahlsynchronität zwischen letzterer und dem zu schaltenden Splitgang-Zahnrad gegeben und signalisiert ist, dann wird - im Fall des Vorhandenseins eines E-Gas-Fahrpedals 7 bei geschlossen gehaltener Kupplung 3 das betreffende Splitgang-Zahnrad in Wirkverbindung mit dem auf der Getriebehauptwelle 40 sitzenden Zahnrad gebracht; wenn dagen ein herkömmliches Fahrpedal verwendet ist, dann veranlaßt die Steuerelektronik 11 durch einen Befehl das Öffnen der Kupplung 3, das Splitgang-Zahnrad wird manuell oder automatisch gesteuert in Wirkverbindung mit dem auf der Getriebehauptwelle 40 sitzenden Zahnrad geschaltet und zuletzt wird die Kupplung 3 auf einen Befehl der Steuerelektronik 11 hin wieder geschlossen.

Dies bedeutet, daß trotz eines vergleichsweise einfachen, bauteilmäßig abgemagerten Schaltgetriebes ein äußerst kurzes und trotzdem komfortables Schalten der Gänge bei Anwendung der erfindungsgemäßen Verbundsteuerung erzielbar ist.

Die Steuerelektronik 11 arbeitet auf der Basis ihr von den eingangs erwähnten und an ihr angeschlossenen Sensoren gelieferten bzw. gemeldeten Betriebsdaten und verarbeitet diese bzw. setzt diese in Befehle an das Stellorgan 34 der Kupplung 3, das Stellglied 14 der Drosselklappe 13 und gegebenenfalls das auf die Regelstange der Einspritzpumpe 2 einwirkende Stellorgan 16 für eine exakt koordinierte und möglichst kurze Ausführung der für einen Gangschaltvorgang notwendigen Maßnahmen um.

Die Steuerelektronik 11 kann einen Mikroprozessor, Daten- und Programmspeicher sowie Ein- und Ausgabeperipherien aufweisen und anhand eingespeicherter Kenndaten bzw. Kennfelder die ihr von den angeschlossenen Sensoren gemeldeten Betriebsdaten bzw. Schaltanforderungen per Programm verarbeiten. Die Steuerelektronik 11 ist dann in der Lage, an die Stellorgane solche Befehle auszugeben, daß ein geregeltes Verstellen der Motorbremsen-Drosselklappe 13 (mit Zwischenstellungen zwischen Auf und Zu), gegebenenfalls auch der Einspritzpumpe 2 und damit der Kraftstoffeinspritzmenge sowie Schalten der Kupplung 3 (mit Schleifenlassen) über der Zeit erzielt wird. In jedem Fall kann hervorragend auf die Gegebenheiten des Fahrzeuges, dessen Beladungszustand, des Straßenzustandes und die Topographie der befahrenen Straße bzw. des befahrenen Geländes Rücksicht genommen und eine dementsprechend angepaßte Aktivierungsstrategie von der Steuerelektronik 11 errechnet und in entsprechende Befehle umgesetzt werden.

**Ansprüche**

1. Verfahren zum Schalten eines in einem Kraftfahrzeug zwischen Antriebsmotor (1) und Achsantriebsstrang (5) gegebenen, unsynchronisierten (Klauen-)Schaltgetriebes (4) und, gegebenenfalls automatischen, Betätigen der zugehörigen Kupplung (3), wobei das Schaltgetriebe (4) über mehrere vom Fahrer mit dem Gang-Schalthebel (8) direkt mechanisch einlegbare Hauptgänge (41, 42, 43, 44, 45) und mehrere jeweils in Verbindung mit einem Hauptgang vorwählbare Splitgänge (49, 50, 51) verfügt, dadurch gekennzeichnet, daß zum Beschleunigen der Gangschaltung eine Drehzahlanpassung der mit den auf der Getriebehauptwelle (40) sitzenden Zahnrädern in Wirkverbindung zu bringenden Zahnräder in der Weise bewirkt wird, daß - nachdem das zu schaltende Zahnrad in eine Neutral- bzw. Zwischenposition gebracht ist - bei geschlossen gehaltener Kupplung (3)

a) für ein "Hochschalten" die Drehzahl des Antriebsmotors (1) durch automatisch gesteuerte bzw. geregelte Betätigung der Motorbremse und gleichzeitige Kraftstoffeinspritzmengenzurücknahme gedrosselt, dagegen

b) für ein "Herunterschalten" die Drehzahl des Antriebsmotors (1) durch, insbesondere automatisch gesteuerte bzw. geregelte Kraftstoffeinspritzmengenerhöhung angehoben und dann - bei sensormäßig erkannter Drehzahlsynchronität der zu schaltenden Zahnräder - das betreffende Zahnrad in Wirkverbindung mit dem auf der solchermaßen beschleunigten bzw. abgebremsten Getriebehauptwelle (40) gegebenen Zahnrad gebracht wird.

2. Verfahren nach Anspruch 1, dadurch gekennzeichnet, daß bei einem Schaltgetriebe (4; 39), dessen durch druckmittelbetätigte Stelleinrichtungen verschiebbaren SplitgangZahnrädern mechanische, erst bei Synchrondrehzahl mit der Getriebehauptwelle (40) ein In-Eingriff-bringen mit den auf letzterer angeordneten Zahnrädern erlaubende Schalthilfeorgane (52, 53, 54) zugeordnet sind,

a) zum Schalten der Hauptgänge (41, 42, 43, 44, 45) ausgehend von in Neutralstellung befindlichem Gang-Schalthebel (8)

- für ein vom Fahrer durch eine Bewegung des GangSchalthebels (8) in Richtung des gewünschten Hauptganges signalisiertes "Hochschalten" bei geschlossen gehaltener Kupplung (3) die Motordrehzahl durch Schließen der im Abgassystem (12) gegebenen Motorbremsen-Drosselklappe (13) und gleichzeitige Kraftstoffeinspritzmengenzurücknahme durch Verstellung der Einspritzpumpe (2) gedrosselt, dann - im Fall des Vorhandenseins eines E-Gas-Fahrpedals (7) - bei geschlossen gehaltener Kupplung (3) vom Fahrer der gewünschte Hauptgang durch entsprechende Betätigung des Gang-Schalthebels (8) eingelegt, dagegen - wenn ein herkömmliches Fahrpedal (7) vorhanden ist - die Kupplung (3) geöffnet, vom Fahrer der gewünschte Hauptgang durch entsprechende Betätigung des Gang-Schalthebels (8) eingelegt und anschließend die Kupplung (3) wieder geschlossen wird, dagegen

- für ein vom Fahrer durch eine Bewegung des GangSchalthebels (8) in Richtung des gewünschten Hauptganges signalisiertes "Herunterschalten" ausgehend von geschlossener Kupplung (3) die Motordrehzahl durch Kraftstoffeinspritzmengenerhöhung mittels einer entsprechenden Verstellung der Einspritzpumpe (2) angehoben, dann - im Fall des Vorhandenseins eines E-Gas-Fahrpedals (7) - bei geschlossen gehaltener Kupplung (3) vom Fahrer der gewünschte Hauptgang durch entsprechende Betätigung des Gangs-Schalthebels (8) eingelegt, dagegen - wenn ein herkömmliches Fahrpedal (7) vorhanden ist - die Kupplung (3) wieder geöffnet, vom Fahrer der niedrigere Hauptgang durch entsprechende Betätigung des Gang-Schalthebels (8) eingelegt und zuletzt die Kupplung (3) wieder geschlossen wird.

3. Verfahren nach Anspruch 2, dadurch gekennzeichnet, daß bei einem Schaltgetriebe der genannten Art zum Schalten der Splitgänge vom Fahrer bei geschlossener Kupplung (3) der gewünschte Splitgang mit dem am Gang-Schalthebel (8) gegebenen Wahlschalter (55) vorzuwählen ist, worauf das zugehörige Splitgang-Zahnrad über die druckmittelbetätigte Stelleinrichtung in eine eingriffslose Zwischenposition gebracht wird, dann - wenn "Hochschalten" signalisiert war - die Motordrehzahl durch Schließen der Motorbremsen-Drosselklappe (13) und Kraftstoffeinspritzmengenzurücknahme durch entsprechende Verstellung der Einspritzpumpe (2) gedrosselt wird, jedoch - wenn ein "Herunterschalten" signalisiert war - die Motordrehzahl über eine Kraftstoffeinspritzmengenerhöhung durch entsprechende Verstellung der Einspritzpumpe (2) angehoben wird und schließlich - wenn jeweils Drehzahlsynchronität zwischen der solchermaßen beschleunigten bzw. abgebremsten Getriebehauptwelle (40) und betreffendem Splitgang-Zahnrad gegeben ist - letzteres in Wirkverbindung mit dem auf der Getriebehauptwelle (40) sitzenden Zahnrad geschaltet wird.

4. Verfahren nach Anspruch 1, dadurch gekennzeichnet, daß bei einem Schaltgetriebe (4), das keine Getriebebremse aufweist und dessen durch druckmittelbetätigte Stelleinrichtungen oder rein mechanisch verschiebbare Splitgang-Zahnräder ohne Zuhilfenahme mechanischer, drehzahlsynchronisierender Schaltorgane mit den auf der Getriebehauptwelle (40) sitzenden Zahnrädern in Wirkverbindung bringbar sind,

a) zum Schalten der Hauptgänge (41, 42, 43, 44, 45) ausgehend von in Neutralstellung befindlichem Gang-Schalthebel (8)

- für ein vom Fahrer durch eine Bewegung des Gang-Schalthebels (8) in Richtung des gewünschten Hauptgangs signalisiertes "Hochschalten" bei geschlossen gehaltener Kupplung (3) die Motordrehzahl durch Schließen der im Abgassystem (12) gegebenen Motorbremsen-Drosselklappe (13) und gleichzeitige Kraftstoffeinspritzmengenzurücknahme durch entsprechende Verstellung der Einspritzpumpe (2) gedrosselt, dann

- im Fall des Vorhandenseins eines E-Gas-Fahrpedals (7) - bei geschlossen gehaltener Kupplung (3) vom Fahrer der gewünschte Hauptgang durch entsprechende Betätigung des Gang-Schalthebels (8) eingelegt, dagegen - wenn ein herkömmliches Fahrpedal (7) vorhanden ist - die Kupplung (3) geöffnet, vom Fahrer der gewünschte Hauptgang durch entsprechende Betätigung des Gang-Schalthebels (8) eingelegt und anschließend die Kupplung (3) wieder geschlossen wird, dagegen

- für ein vom Fahrer durch Zurücknahme des Fahrpedals (7) signalisiertes "Herunterschalten" zunächst die Kupplung (3) geöffnet, vom Fahrer der Gang-Schalthebel (8) in Neutralstellung gebracht und die Kupplung (3) wieder geschlossen wird, anschließend die Motordrehzahl über eine Kraftstoffeinspritzmengenerhöhung durch eine entsprechende Verstellung der Einspritzpumpe (2) angehoben, dann - im Fall des Vorhandenseins eines E-Gas-Fahrpedals (7) - bei geschlossen gehaltener Kupplung (3) vom Fahrer der gewünschte Hauptgang durch entsprechende Betätigung des GangSchalthebles (8) eingelegt, dagegen - wenn ein herkömmliches Fahrpedal (7) vorhanden ist - die Kupplung (3) wieder geöffnet, vom Fahrer der niedrigere Hauptgang durch entsprechende Betätigung des Gang-Schalthebels (8) eingelegt und zuletzt die Kupplung (3) wieder geschlossen wird.

5. Verfahren nach Anspruch 4, dadurch gekennzeichnet, daß bei einem Schaltgetriebe der dort angegebenen Art zum Schalten der Splitgänge vom Fahrer bei geschlossener Kupplung (3) der gewünschte Splitgang am Gang-Schalthebel (8) durch einen dortigen Wahlschalter (55) vorzuwählen ist, worauf das zugehörige Splitgang-Zahnrad mittels der druckmittelbetätigten Stelleinrichtung in eine eingriffslose Zwischenposition gebracht wird, dann - wenn "Hochschalten" signalisiert war - bei weiterhin geschlossen gehaltener Kupplung (3) die Motordrehzahl durch Schließen der im Abgasstrang (12) gegebenen Motorbremsen-Drosselklappe (13) und gleichzeitige Kraftstoffeinspritzmengenzurücknahme durch entsprechende Verstellung der Einspritzpumpe (2) gedrosselt wird, jedoch - wenn "Herunterschalten" signalisiert war - bei weiterhin geschlossener Kupplung (3) die Motordrehzahl

über eine Kraftstoffeinspritzmengerhöhung durch entsprechende Verstellung der Einspritzpumpe (2) angehoben wird, dann bei erreichter Drehzahlsynchronität zwischen der solchermaßen abgebremsten bzw. beschleunigten Getriebehauptwelle (40) und zu schaltendem Splitgang-Zahnrad - im Fall des Vorhandenseins eines E-Gas-Fahrpedals (7) bei geschlossen gehaltener Kupplung (3) das betreffende Splitgang-Zahnrad in Wirkverbindung mit dem auf der Getriebehauptwelle (4) sitzenden Zahnrad gebracht, dagegen - wenn ein herkömmliches Fahrpedal (7) vorhanden ist, die Kupplung (3) geöffnet, das betreffende Splitgang-Zahnrad in Wirkverbindung mit der dem auf Getriebehauptwelle (4) sitzenden Zahnrad gebracht und anschließend die Kupplung (3) wieder geschlossen wird.

6. Vorrichtung zur Durchführung des Verfahrens nach den vorhergehenden Ansprüchen, gekennzeichnet durch eine Steuerelektronik (11), die auf der Basis ihr

- vom Zündschalter (20),

- von einem die Drehzahl des Antriebsmotors (1) erfassenden Sensor (22),

- von Drehzahlen innerhalb des Schaltgetriebes (4; 39) erfassenden Sensoren (24),

- von einem die Stellung und Betätigung des Fahrpedals (7) erfassenden Sensor (28),

- von einem die Betätigung der Motorbremse erfassenden Sensor (30),

- von einem die Betätigung des Gang-Schalthebels (8) erfassenden Sensor (32),

- von Gangwahlerkennungs-Sensoren (35),

- von die Schaltzustände der Kupplung (3) und des zugehörigen Stellorganes (34) erfassenden Sensoren,

- von die internen Schaltzustände im Schaltgetriebe (4; 39) erfassenden Sensoren,

- von einem die Stellung der Motorbremsen-Drosselklappe (13) erfassenden Sensor,

- von einem die Regelstangenstellung der Einspritzpumpe (2) erfassenden Sensor, und

- gegebenenfalls weiteren Sensoren

gemeldeter Betriebsdaten arbeitet und diese in Befehle an das Stellorgan (34) der Kupplung (3), ein die Drosselklappe (13) der Motorbremse betätigendes Stellorgan (14), sowie gegebenenfalls ein auf der Regelstange der Einspritzpumpe (2) einwirkendes Verstellglied (16) und die die Splitgang-Zahnräder verschiebende, druckmittelbetätigte Stelleinrichtung umsetzt, für eine exakt koordinierte und möglichst kurze Ausführung der für einen Gangschaltvorgang notwendigen Maßnahmen.

7. Vorrichtung nach Anspruch 6, dadurch gekennzeichnet, daß die Steuerelektronik (11) über einen Mikroprozessor, Daten-und Programmspeicher sowie Ein- und Ausgabeperipherien verfügt und anhand eingespeicherter Kenndaten bzw. Kennfelder die ihr signalisierten Betriebsdaten bzw. Schaltanforderungen per Programm verarbeitet sowie solche Befehle an die angeschlossenen Stellorgane (14, 16, 32) ausgibt, daß ein geregeltes Verstellen der MotorbremsenDrosselklappe (13) und gegebenenfalls der Einspritzpumpe (2) sowie geregeltes Schalten der Kupplung (3) über der Zeit erfolgt.

Fig. 1

# Fig. 2

Steuerelektronik

11

Fig.4

Fig.3

EP 0 427 000 A2